# EUROPÄISCHE PATENTSCHRIFT

(11) **EP 0 283 859 B1**
(45) Veröffentlichungstag und Bekanntmachung des Hinweises auf die Patenterteilung: **12.01.1994**
(21) Anmeldenummer: 88103756.8
(22) Anmeldetag: 10.03.1988
(51) Int. Cl.: H05B 6/12, H05B 6/44

(54) **Spulenanordnung, Verfahren zur Herstellung von Spulenpaaren sowie Vorrichtung zur Herstellung von Spulenpaaren**
Coil arrangement, manufacturing process of pairs of coils and manufacturing device of pairs of coils
Disposition de bobines, procédé de fabrication de paires de bobines ainsi que dispositif de fabrication de paires de bobines

(30) Priorität: 19.03.1987 DE 3708963
(43) Veröffentlichungstag der Anmeldung: 28.09.1988
(73) Patentinhaber: THOMSON ELECTROMENAGER S.A., 75020 Paris (FR)
(72) Erfinder: Rilly, Gerard, Dr.-Ing., D-7731 Unterkirnach (DE); Jeanneteau, Laurent, Ing., D-7730 Pfaffenweiler (DE); Morizot, Gerard, Ing., D-7730 Villingen (DE)
(74) Vertreter: Einsel, Robert, Dipl.-Ing.

(56) Entgegenhaltungen:
- CH-A- 592 997
- FR-A- 2 315 819
- FR-A- 2 481 042
- US-A- 4 029 926

## Beschreibung

Die Erfindung betrifft eine Spulenanordnung aus wenigstens einem Spulenpaar nach dem Oberbegriff des Anspruchs 1. Eine solche Spulenanordnung ist z.B. bekannt aus FR-A-2 315 819.

Bei Spulenanordnungen zur induktiven Erwärmung elektrisch leitender Körper wird mittels hochfrequenzgespeister Wicklungen ein magnetisches Wechselfeld in dem Körper induziert. Wegen der zu übertragenden elektrischen Energie fließen in der Spulenanordnung Ströme, deren Amplitude etwa zwischen 18 und 45 A bei einer Frequenz zwischen 25 und 40 KHz liegt. Beim Betrieb einer solchen Spulenanordnung können sich Probleme aus hohen Eigenverlusten, einer inhomogenen Feldverteilung sowie aus der Störstrahlung infolge der erheblichen Hochfrequenzleistung ergeben.

Der Erfindung liegt die Aufgabe zugrunde, eine Spulenanordnung zu schaffen, die geringe Eigenverluste aufweist, eine homogene Feldverteilung bietet und eine geringe Störstrahlung abgibt.

Diese Aufgabe wird bei einer Spulenanordnung nach dem Oberbegriff des Anspruchs 1 durch die im kennzeichnenden Teil angegebenen Merkmale gelöst.

Eine geringe Störstrahlung wird einmal dadurch erreicht, daß jedes Spulenpaar aus Wicklungen mit entgegengesetztem Wicklungssinn besteht. Mit zunehmendem Abstand von der Spulenanordnung nähern sich die Ausrichtungen der Feldkomponenten aneinander an, während der Richtungssinn entgegengesetzt verläuft. Die Feldresultierende geht so gegen Null. In einem Abstand, der im Vergleich zu den Abmessungen der Spulenanordnung groß ist, kann daher praktisch kein resultierendes Feld mehr nachgewiesen werden.

Durch die Ausbildung der Wicklungen mit einem durchgehenden Leiter werden Übergangsstellen, an denen zwangsläufig ein höherer Widerstand auftreten würde, ausgeschlossen. Neben einer Vermeidung thermischer Überbeanspruchung der Wicklungen selbst wird durch diese Maßnahme auch die bei vorgegebener Nutzleistung erforderliche elektrische Primärleistung vermindert, was sich ebenfalls günstig auf eine Verminderung der absoluten Feldkomponenten und damit der Störstrahlung auswirkt. Das letztgenannte Merkmal fördert die Lösung der der Erfindung zugrunde liegenden Aufgabe daher sowohl für sich allein als auch in Kombination mit dem Merkmal des entgegengesetzten Wicklungssinns der Wicklungen der Spulenpaare.

Die Aufteilung auf mehrere Wicklungen führt zu einer homogenen Feldverteilung im Nahfeld und ist für eine gleichmäßige Erwärmung der elektrisch leitenden Körper ausschlaggebend. Besonders günstige Verhältnisse werden erreicht, wenn nach einer bevorzugten Ausgestaltung zwei Spulenpaare in einer kleeblattförmigen Konfiguration angeordnet werden. Das Feld ist dann in der Länge und Breite gleichmäßig ausgebildet und die Spulenanordnung so besonders für Kochstellen geeignet.

Weiterbildungen der Spulenanordnung sind in den Ansprüchen 2 bis 4 angegeben.

Die Erfindung betrifft ferner ein Verfahren zur Herstellung von Spulenpaaren nach dem Oberbegriff des Anspruchs 5.

Diesbezüglich liegt ihr die Aufgabe zugrunde, ein Verfahren zur Herstellung von Spulenpaaren zu schaffen, mit dessen Hilfe einheitlich aufgebaute, verlustarme Spulenpaare hergestellt werden können.

Die Erfindung löst diese Aufgabe bei einem Verfahren nach dem Oberbegriff des Anspruchs 8 durch die im kennzeichnenden Teil angegebenen Merkmale.

Durch die erfindungsgemäße Maßnahme kann der Wickelvorgang so durchgeführt werden, wie er für Einzelspulen bekannt ist. Eine bereits gewickelte Wicklung des Spulenpaares stört daher das Wickeln der weiteren Wicklung oder Wicklungen nicht. So ist es möglich, die Wicklungen alle sorgfältig nach einheitlichen Kriterien herzustellen. Wenn die Einzelwicklungen nach dem endgültigen Wickeln in eine gemeinsame Ebene umgeklappt werden, ist sichergestellt, daß sie einheitliche Eigenschaften aufweisen, so daß die Störstrahlung mit zunehmender Entfernung von der Spulenanordnung sicher zu Null wird.

Weiterbildungen des erfindungsgemäßen Verfahrens ergeben sich aus den Ansprüchen 6 bis 8.

Die Erfindung betrifft ferner eine Vorrichtung zur Herstellung von Spulenpaaren nach dem Oberbegriff des Anspruchs 9.

Diesbezüglich liegt ihr die Aufgabe zugrunde, eine Vorrichtung der genannten Art so auszubilden, daß die Wicklungen von Spulenpaaren einheitlich gewickelt werden können und so einheitliche Eigenschaften erhalten.

Diese Aufgabe wird bei einer Vorrichtung nach dem Oberbegriff des Anspruchs 9 durch die im kennzeichnenden Teil angegebenen Merkmale gelöst.

Die erfindungsgemäße Vorrichtung ermöglicht, das Wickeln sämtlicher Wicklungen der Spulenpaare nacheinander in parallel angeordneten Wickelkammern durchzuführen, wobei durch die Ausbildung der Wickelkammern die räumlichen Abmessungen der Spulen im Hinblick auf die gewünschte Einheitlichkeit vorgegeben werden. Die Einheitlichkeit wird also zwangsläufig erzielt, ohne daß es auf besondere Geschicklichkeit oder ein besonderes Maß an Sorgfalt beim Fertigungspersonal ankommt. Nach dem Wickeln der Wicklungen können diese durch Zerlegen der Vorrichtung unter Beibehaltung ihrer Form in die endgültige Lage, d.h. in eine gemeinsame Ebene umgeklappt werden.

Eine Weiterbildung und vorteilhafte Ausführungsform der Vorrichtung ergibt sich aus dem Anspruch 10.

Die Erfindung wird nun an Hand zweier Ausführungsbeispiele für die Spulenanordnung sowie einer Vorrichtung zur Herstellung von Spulenpaaren, wie sie in der Zeichnung dargestellt sind, näher erläutert.

In der Zeichnung zeigen:
- Fig. 1: eine Draufsicht auf eine Spulenanordnung in kleeblattförmiger Konfiguration,
- Fig. 2: eine Spulenanordnung ähnlich Fig. 1, jedoch mit zwei Teilwicklungen pro Wicklung und
- Fig. 3: in perspektivischer Ansicht eine Vorrichtung zur Herstellung von Spulenpaaren.

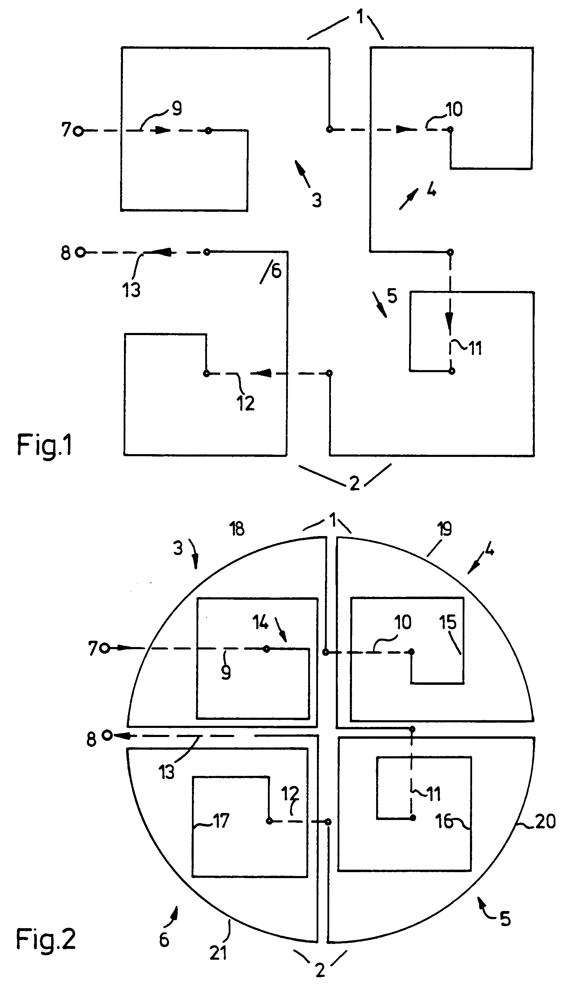

Die in Fig. 1 dargestellte Spulenanordnung umfaßt ein erstes Spulenpaar 1 sowie ein zweites Spulenpaar 2 mit Einzelwicklungen 3, 4, 5 und 6. Die Spulenanordnung wird über Klemmen 7 und 8 gespeist. Die Spulenpaare 1 und 2 sind elektrisch in Serie geschaltet und räumlich so angeordnet, daß sich insgesamt eine kleeblattförmige Konfiguration ergibt. Dabei ändert sich der Wicklungssinn in Stromflußrichtung von jeder Wicklung 3;5 zur anderen 4;6. Die Wicklungen 3,4,5 und 6 sind mit den Klemmen 7 und 8 bzw. untereinander durch Anschlußleitungen 9 und 13 bzw. durch Verbindungsleitungen 10,11 und 12 verbunden.

Statt der gezeichneten einen Windung für jede Wicklung 3,4,5,6 können auch mehrere Windungen vorgesehen sein. In diesem Fall werden zweckmäßig die Windungszahlen aller Wicklungen gleich gewählt. Sämtliche vier Wicklungen 3, 4, 5 und 6 der beiden Spulenpaare 1 und 2 einschließlich der Anschluß- und Verbindungsleitungen 9,10,11,12 und 13 bestehen aus einem durchgehenden Leiter oder mehreren parallel liegenden, gebündelten Leitern. Die Verbindungsleitungen 10,11 und 12 zwischen den einzelnen Wicklungen 3, 4, 5 und 6 tauchen senkrecht zur Spulenebene ab, verlaufen dann in einem geringen Abstand parallel und tauchen dann wieder nach oben in die Spulenebene ein.

In unmittelbarer Nähe der Spulenanordnung wird eine sehr homogene Feldverteilung und damit eine gleichmäßige Energieübertragung auf den zu erwärmenden Körper ermöglicht. Dies ergibt sich dadurch, daß in unmittelbarer Nähe der Spulenanordnung die Feldkomponente durch die Einzelwicklungen bestimmt wird, eine zur Feldschwächung führende Überlagerung also noch nicht wirksam ist. Die Eigenverluste in der Spulenanordnung werden lediglich durch die Leitfähigkeit des verwendeten Leitermaterials sowie die geometrischen Abmessungen der Leiter bestimmt. Durch die Verwendung eines oder mehrerer durchgehender Leiter werden Inhomogenitäten ihrer geometrischen Abmessungen oder ihres Materials vermieden und können daher keine Ursache für erhöhte Verluste in der Spulenanordnung bilden.

In der Darstellung nach Fig. 1 besitzen die Wicklungen 3 und 5 bzw. 4 und 6 den gleichen Wicklungssinn. Die Feldkomponenten heben sich daher mit zunehmender Entfernung von den Wicklungen auf. Trotz eines sehr ausgeprägten magnetischen Feldes in der Nähe ist das resultierende Feld in größerer Entfernung und damit die von der Spulenanordnung ausgehende Störstrahlung extrem gering.

In Weiterbildung dieser Maßnahme sind auch die Anschluß- und Verbindungsleitungen 9,10,11,12 und 13 so angeordnet, daß sich die durch die in diesen Leitungen fließenden Ströme verursachten magnetischen Felder gegenseitig aufheben. Zu diesem Zweck nehmen die Verbindungsleitungen 10,11,12 jeder Wicklung 3,4,5,6 untereinander einen rechten Winkel ein. Ferner durchkreuzen die Anschluß- und Verbindungsleitungen 9,10,11,12,13 jeder Wicklung 3,4,5,6 die gerade verlaufenden Seiten etwa mittig.

In Fig. 2 ist eine Weiterbildung der Spulenanordnung gemäß Fig. 1 dargestellt. Die Wicklungen 3, 4, 5 und 6 bestehen jeweils aus einer inneren Teilwicklung 14,15,16,17 und einer äußeren Teilwicklung 18,19,20,21. Auch in diesem Fall können die Wicklungen wieder aus mehreren Windungen bestehen, wobei allerdings die Windungen der äußeren und der inneren Teilwicklungen unterschiedlich sein können. Bei einer bevorzugten Ausführungsform umfassen die inneren Teilwicklungen 14,15,16,17 etwa zehn Windungen und die äußere Teilwicklungen 18,19,20,21 etwa vier Windungen.

Zur Anpassung an die geometrische Ausgestaltung der zu erwärmenden Gegenstände kann der Spulenanordnung auch eine kreisförmige Grundform gegeben werden. Dies läßt sich dadurch erreichen, daß die außen liegenden Bereiche der äußeren Teilwicklungen 18,19,20,21 oder auch zusätzlich der inneren Teilwicklungen 14,15,16,17 kreisbogenartig geformt sind. Die innen liegenden Bereiche der Teilwicklungen 14,15,16,17,18,19,20 und 20 werden zweckmäßig gerade verlaufend mit rechtwinklig aufeinanderstehenden Seiten ausgeführt und so ausgerichtet, daß benachbarte Bereiche parallel verlaufen. Auf diese Weise läßt sich auch im Zentrum der Spulenanordnung ein Magnetfeld ausprägen.

Die in Fig. 2 dargestellte Spulenanordnung ergibt ein in der unmittelbaren Nähe ein besonders ausgewogenes homogenes Magnetfeld, was zu einer gleichmäßigen Erwärmung des zu erwärmenden Gegenstandes führt. Dies ist besonders für die Anwendung bei Kochstellen wichtig, damit das Kochgut nicht an einzelnen Stellen anbrennt.

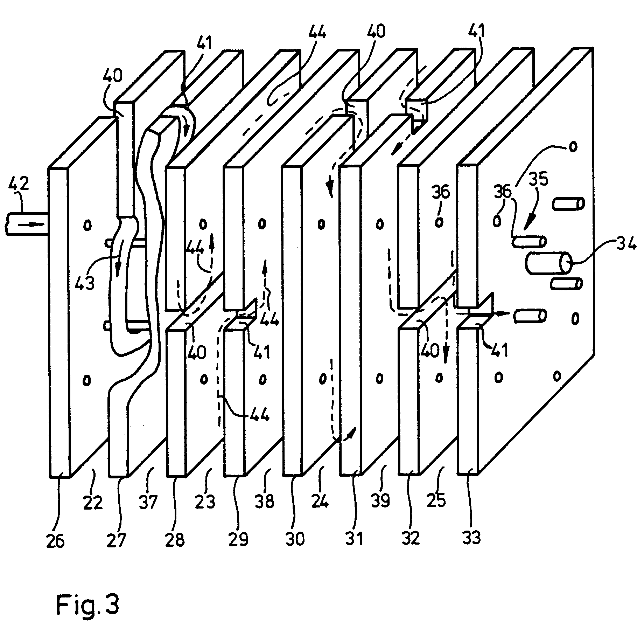

Wie die Darstellung in Fig. 1 und besonders in Fig. 2 erkennen läßt, wäre eine freihändige Herstellung der Spulenanordnung außerordentlich schwierig. Es wurde deshalb eine Vorrichtung entwickelt, mit der entsprechende Spulenanordnungen herstellbar sind. Diese ist in Fig. 3 dargestellt. Die Vorrichtung besteht aus mehreren Wickelkammern 22, 23, 24 und 25, welche durch Seitenwände 26,27,28,29,30,31,32 und 33 begrenzt sind. Die Wickelkammern 22,23,24,25 sind koaxial und parallel durch entsprechende Anordnung und Ausrichtung der Seitenwände 26 bis 33 ausgerichtet. Im Zentrum werden die Seitenwände 26 bis 33 von einer Achse 34 durchgriffen, welche die Breite b der Wickelkammern 22,23,24,25 sowie die gegenseitige Ausrichtung der Seitenwände 26 bis 33 vorgibt. Die Achse 34 ist mit nicht dargestellten Distanzscheiben und Muttern versehen, damit die Vorrichtung nach Aufbringung der Wicklungen zerlegt werden kann und die Wicklungen in die gemeinsame Ebene umgeklappt werden können.

Der Durchmesser der inneren und äußeren Teilwicklungen läßt sich durch eine Wickeldornanordnung 35 aus inneren und äußeren Wickeldornen festlegen, welche durch entsprechende Bohrungen 36 und 37 durch alle Wickelkammern 22 bis 25 durchsteckbar sind.

Zwischen den Wickelkammern 22 bis 25 sind Verbindungskammern 37, 38 und 39 vorgesehen, welche etwa die gleiche Breite b wie die Wickelkammern 22 bis 25 besitzen. Die Verbindungskammern 37,38,39 dienen dazu, den Platz und die Länge für Leiterbereiche zur Verfügung zu stellen, die die Wicklungen eines oder mehrerer Spulenpaare verbinden.

In den Seitenwänden 26, 28, 30 und 32 sind mittig radial verlaufende, nach außen offene Schlitze 40 eingelassen, die in Höhe der Wickeldornanordnung 35 enden. Die Schlitze 40 haben etwa die Breite b und entsprechen damit dem vorgesehenen Leiterdurchmesser der Wicklungen. In den anderen Seitenwänden 27, 29, 31 und 33 sind Schlitze 41 angeordnet, die nur eine etwa dem Leiterdurchmesser der Wicklungen entsprechende Tiefe aufweisen. Die Schlitze 40;41 in den Seitenwänden 26,27;28,29;30,31;32,33 benachbarter Wickelkammern 22;23;24;25 sind im rechten Winkel gegeneinander versetzt. Sie können sowohl umlaufend oder auch, wie dargestellt, wechselseitig versetzt sein.

Zum Aufbringen der Wicklung wird wie folgt vorgegangen. Zunächst wird von links ein Leiter 42 in den Schlitz 40 der Seitenwand 26 eingeführt und in Richtung des Pfeils 43 um die Wickeldornanordnung 35 entsprechend der gewünschten Windungszahl gewickelt. Die Anordnung der ersten Windung ist in Fig. 3 durch die ausgebrochene Darstellung der Seitenwand 27 erkennbar. Nach Aufbringen der inneren Teilwicklung werden von links die äußeren Wickeldorne der Wickeldornanordnung 35 durch die Bohrungen 36 eingeführt und die äußere Wicklung aufgebracht. Anschießend wird die Wickelkammer 22 durch den Schlitz 41 verlassen, in der Verbindungskammer 37 eine viertel Windung aufgebracht und der Leiter durch den Schlitz 40 in der Seitenwand 28 in die Wickelkammer 23 eingeführt.

Unter Änderung des Wicklungssinns, wie der gestrichelte Pfeil 44 zeigt, wird nun in analoger Weise die zweite Wicklung aufgebracht. Anschließend wird der Leiter durch die Verbindungskammer 38 in die Wickelkammer 24 geführt und unter Umkehr des Wicklungssinns nun die dritte Wicklung hergestellt. In der Wickelkammer 35 wird wiederum der Wicklungssinn umgekehrt. Nachdem alle vier Wicklungen hergestellt worden sind, werden die Wickeldornanordnung 35 sowie die Achse 34 entfernt, die Seitenwände 26 bis 33 zwischen den Wicklungen herausgezogen und die Wicklungen in eine gemeinsame Ebene umgeklappt.

Die Spulenanordnung besteht nun aus quadratischen Einzelwicklungen. Soll die Spulenanordnung eine kreisförmige Gestalt erhalten, so können die außen liegenden Bereich der Wicklungen kreisbogenartig geformt werden. Sofern dabei die außen liegenden Bereiche der inneren Teilwicklungen im Wege sind, können auch diese leicht nach innen umgebogen werden. Mit dieser Maßnahme ist die Herstellung beendet und die Klemmen der Spulenanordnung können nun mit einer Energiequelle verbunden werden.

## Patentansprüche

1. Spulenanordnung aus wenigstens zwei in sternförmiger Konfiguration angeordneten Spulenpaaren (1;2) deren Wicklungen (3,4;5,6) räumlich in einer Ebene und elektrisch in Serie liegen und dabei entgegengesetzten Wicklungssinn aufweisen, insbesondere für Kochstellen für mit induktiv beheizbaren Kochplatten, **dadurch gekennzeichnet,** daß jede der Wicklungen (3;4;5;6), die einen oder mehrere parallel gebündelte durchgehende gemeinsame Leiter (42) umfassen, eine von abgewinkelten geradlinigen Wicklungsstrecken gebildete innere Teilwicklung (14;15;16;17) und eine sich daran unmittelbar anschließende äußere Teilwicklung (18;19;20;21) aufweist, die von einer kreisbogenartigen Wicklungsstrecke sowie geradlinigen Wicklungsstrecken gebildet wird, wobei jede geradlinige Wicklungsstrecke jeder äußeren Teilwicklung (18;19;20;21) parallel zu einer Wicklungsstrecke der inneren Teilwicklung (14;15;16;17) und zu einer der geradlinigen Wicklungsstrecken der äußeren Teilwicklung der entsprechend benachbarten Wicklung (3,4,5,6) ausgerichtet ist.

2. Spulenanordnung nach Anspruch 1, **dadurch gekennzeichnet**, daß Anschluß- oder Verbindungsleitungen (9,10,11,29) für jede Wicklung (3,4,5,6) vorgesehen sind, die in einem geringen Abstand unterhalb der Spulenebene und parallel zu dieser verlaufen sowie entsprechende, gerade verlaufende Wicklungsstrecken mittig kreuzen und im Falle zweier Spulenpaare (1,2) gegenseitig einen rechten Winkel einnehmen.

3. Verfahren zur Herstellung von Spulenpaaren (1;2), deren Wicklungen (1,2;3,4) in einer Ebene liegen, insbesondere für Kochstellen mit induktiv beheizten Kochplatten, **dadurch gekennzeichnet,** daß die Wicklungen (3,4,5,6) zuerst koaxial in parallelen Ebenen mit einem oder mehreren parallel gebündelten, durchgehenden gemeinsamen Leitern gewickelt werden, wobei zwischen den parallelen Ebenen ein Übergangsbereich einer vorgegebenen Länge zur Bildung eines die Spulen oder mehrerer Spulenpaare (1,2) verbindenden Leiterbereichs durchlaufen wird und die somit entstehenden Anschluß- oder Verbindungsleitungen jeder Wicklung (3,4,5,6) parallel zur Spulenebene gegenseitig unter einem rechten Winkel nach außen geführt werden, und daß anschließend die Wicklungen (3,4,5,6) durch Umklappen in eine gemeinsame Ebene in eine sternförmige, vorzugsweise kleeblattförmige Konfiguration überführt werden mit der Folge, daß in Bezug auf die gemeinsame Ebene die Verbindungsleitungen jeder Wicklung (3,4,5,6) auf einer Seite verlaufen.

4. Verfahren nach Anspruch 3, **dadurch gekennzeichnet,** daß jede Wicklung (3;4;5;6) aus einer inneren Teilwicklung (14;15;16;17) und einer sich daran unmittelbar anschließenden äußeren Teilwicklung (18;19;20;21) gebildet wird.

5. Verfahren nach Anspruch 3 oder 4, **dadurch gekennzeichnet,** daß die bei der sternförmigen Konfiguration außenliegenden Bereiche jeder äußeren Teilwicklung (18,19,20,21) in eine kreisbogenartige Form überführt werden, wobei die inneren und äußeren Teilwicklungen in einer rechteckigen Grundform gewickelt werden.

6. Vorrichtung zur Herstellung von Spulenpaaren, deren Wicklungen in einer Ebene liegen, insbesondere für Kochstellen mit induktiv beheizten Kochplatten, **gekennzeichnet durch** wenigstens zwei koaxiale, durch parallele Seitenwände (26,27,28,29,30,31,32,33) begrenzte Wickelkammern (22,23,24,25), die zerlegbar ausgebildet und von einer Wickeldornanordnung (35) gemeinsam durchgriffen sind, daß in jeweils wenigstens einer der beiden Seitenwände (26,28,30,32) der Wickelkammern (22,23,24,25) radiale, nach außen offene Schlitze (40) eingelassen sind, daß die Schlitze (40) in einer der beiden Seitenwände (26,28,30,32) in Höhe der Wickeldornanordnung (35) enden, daß die Schlitze (41) in den anderen Seitenwänden (27,29,31,33) eine etwa dem Leiterdurchmesser der Wicklungen entsprechende Tiefe aufweisen.

7. Vorrichtung nach Anspruch 6, **dadurch gekennzeichnet,** daß die Schlitze (40;41) in den Seitenwänden (26,27;28,29;30,31;32,33) benachbarter Wickelkammern (22,23,24,25) im rechten Winkel gegeneinander versetzt sind, daß die Schlitze (40,41) jeweils in der Mitte der Seitenwände (26,27,28,29,30,31,32,33) angeordnet sind, daß Wickeldornanordnung (35) aus inneren und äußeren, getrennt einführbaren Dornen bestehen und daß zwischen benachbarten Wickelkammern (22,23,24,25) jeweils eine zusätzliche Verbindungskammer (37,38,39) angeordnet ist.

## Claims

1. Coil arrangement consisting of at least two pairs of coils (1; 2) which are arranged in a star configuration and of which the windings (3, 4; 5, 6) lie spatially in one plane and electrically in series and have opposing directions of winding, particularly for cookers with hotplates which can be heated by induction, characterised in that each of the windings (3; 4; 5; 6), which comprise one or several common continuous conductors (42) bunched in parallel, has an inner part-winding (14; 15; 16; 17) formed by angled lengths of straight winding and an outer part-winding (18; 19; 20; 21) immediately adjoining the inner part-winding and formed by an arcuate length of winding as well as straight lengths of winding, wherein each straight length of winding of each outer part-winding (18; 19; 20; 21) is aligned parallel to a length of the inner part-winding (14; 15; 16; 17) and to one of the straight lengths of the outer part-winding of the correspondingly adjacent winding (3, 4, 5, 6).

2. Coil arrangement according to Claim 1, characterised in that terminal or connecting leads (9, 10, 11, 29), which run at a small distance below the coil plane and parallel to the latter and centrally intersect corresponding straight lengths of winding and in the case of two pairs of coils (1) form, a right angle with respect to one another, are provided for each winding (3, 4, 5, 6).

3. Method of producing pairs of coils (1; 2), the windings (1, 2, 3, 4) of which lie in one plane, particularly for cookers with inductively heated hotplates, characterised in that the windings (3, 4, 5, 6) are first of all wound coaxially in parallel planes with one or several common continuous conductors bunched in parallel, wherein between the parallel planes a transition region of a predetermined length is traversed to form a conductor region connecting the coils or several pairs of coils (1, 2) and the resulting terminal and connecting leads of each winding (3, 4, 5, 6) are guided outwards parallel to the coil plane forming a right angle with respect to one another, and that the windings (3, 4, 5, 6) are then changed into a star configuration, preferably a cloverleaf configuration, by turning them into one common plane, and consequently the connecting leads of each winding (3, 4, 5, 5) run on one side with respect to the common plane.

4. Method according to Claim 3, characterised in that each winding (3; 4; 5; 6) is formed by an inner part-winding (14; 15; 16; 17) and an outer part-winding (18; 19; 20; 21) immediately adjoining it.

5. Method according to Claim 3 or 4, characterised in that the regions of each outer part-winding (18, 19, 20, 21) which lie outside in the star configuration are changed into an arcuate shape, the inner and outer part-windings being wound in a rectangular basic shape.

6. Device for producing pairs of coils, the windings of which lie in one plane, particularly for cookers with inductively heated hotplates, characterised by at least two coaxial winding chambers (22, 23, 24, 25) which are delimited by parallel side walls (26, 27, 28, 29, 30, 31, 32, 33), are constructed so that they can be dismantled and are jointly penetrated by a winding mandrel arrangement (35), that radial slots (40) which are open towards the exterior are made in each case in at least one of the two side walls (26, 28, 30, 32) of the winding chambers (22, 23, 24, 25), that the slots (40) in one of the two side walls (26, 28, 30, 32) end at the height of the winding mandrel arrangement (35), and that the slots (41) in the other side walls (27, 29, 31, 33) have a depth corresponding approximately to the conductor diameter of the windings.

7. Device according to Claim 6, characterised in that the slots (40; 41) in the side walls (26, 27; 28, 29; 30, 31; 32, 33) of adjacent winding chambers (22, 23, 24, 25) are offset at right angles with respect to one another, that the slots (40, 41) are in each case arranged in the centre of the side walls (26, 27, 28, 29, 30, 31, 32, 33), that the winding mandrel arrangement (35) consists of inner and outer mandrels which can be introduced separately, and that an additional connection chamber (37, 38, 39) is arranged in each case between adjacent winding chambers (22, 23, 24, 25).

## Revendications

1. Arrangement de bobines consistant en au moins deux paires de bobines (1 ; 2) placées en configuration en forme d'étoile dont les enroulements (3, 4 ; 5, 6) sont placés dans un plan dans l'espace et sont montés en série électriquement en présentant un sens d'enroulement opposé, en particulier pour postes de cuisson avec plaques de cuisson pouvant être chauffées par induction, **caractérisé en ce** que chacun des bobinages (3 ; 4 ; 5 ;6), qui comprennent un ou plusieurs conducteurs (42) communs continus en faisceaux parallèles, présente un enroulement partiel intérieur (14 ; 15 ; 16 ; 17) formé par des parcours d'enroulement en ligne droite coudée et un enroulement partiel extérieur (18 ; 19 ; 20 ; 21) qui le suit directement qui est formé par un parcours d'enroulement en arc de cercle ainsi que par des parcours d'enroulement en ligne droite, chaque parcours d'enroulement en ligne droite de chaque enroulement partiel extérieur (18 ; 19 ; 20 ; 21) étant orienté parallèlement à un parcours d'enroulement de l'enroulement partiel intérieur (14 ; 15 ; 16 ; 17) et à l'un des parcours d'enroulement rectilignes de l'enroulement partiel extérieur du bobinage respectif voisin (3, 4, 5, 6).

2. Arrangement de bobines selon la revendication 1, **caractérisé en ce** que des lignes de jonction ou de connexion (9, 10, 11, 29) sont prévues pour chaque enroulement (3, 4, 5, 6), lignes qui sont à un faible écart au-dessous du plan des bobines et qui sont parallèles à celui-ci et qui croisent des parcours d'enroulement droits correspondants en leur milieu et qui prennent un angle droit l'une par rapport à l'autre dans le cas de deux paires de bobines (1, 2).

3. Procédé pour la fabrication de paires de bobines (1 ; 2) dont les bobinages (1, 2 ; 3, 4) sont situés dans un plan, en particulier pour des postes de cuisson avec des plaques de cuisson chauffées par induction, **caractérisé en ce** que les bobinages (3, 4, 5, 6) sont enroulés tout d'abord de manière coaxiale dans des plans parallèles avec un ou plusieurs conducteurs communs continus en faisceaux parallèles, une zone de transition d'une longueur donnée passant entre les plans parallèles pour former une zone conductrice qui relie les bobines ou plusieurs paires de bobines (1, 2) et les lignes de jonction ou de connexion de chaque bobinage (3, 4, 5, 6) ainsi créées étant guidées vers l'extérieur parallèlement au plan des bobines en formant un angle droit mutuellement et que les enroulements (3, 4, 5, 6) sont ensuite transformés, en étant rabattus dans un plan commun, en une configuration en forme d'étoile, de préférence en forme de feuille de trèfle, ce qui a pour conséquence que les lignes de jonction de chaque bobinage (3, 4, 5, 6) se trouvent d'un côté par rapport au plan commun.

4. Procédé selon la revendication 3, **caractérisé en ce** que chaque bobinage (3 ; 4 ; 5 ; 6) est formé à partir d'un enroulement partiel intérieur (14 ; 15 ; 16 ; 17) et d'un enroulement partiel extérieur (18 ; 19 ; 20 ; 21)) qui le suit immédiatement.

5. Procédé selon la revendication 3 ou 4, **caractérisé en ce** que les zones situées à l'extérieur de chaque enroulement partiel extérieur (18, 19, 20, 21), dans la configuration en forme d'étoile, sont transformées en une forme en arc de cercle, les enroulements partiels intérieurs et extérieurs étant enroulés en une forme de base rectangulaire.

6. Dispositif pour la fabrication de paires de bobines dont les enroulements sont situés en un plan, en particulier pour postes de cuisson avec des plaques de cuisson chauffées par induction, **caractérisé par** au moins deux compartiments de bobinage (22, 23, 24, 25) coaxiaux, délimités par des parois latérales parallèles (26, 27, 28, 29, 30, 31, 32, 33), qui sont configurés en étant démontables et qui sont traversés en commun par un arrangement de mandrins de bobinage (35), que des fentes radiales, ouvertes vers l'extérieur (40), sont ménagées dans respectivement au moins l'une des deux parois latérales (26, 28, 30, 32) des compartiments de bobinage (22, 23, 24, 25), que les fentes (40) se terminent dans l'une des deux parois latérales (26, 28, 30, 32) à hauteur de l'arrangement de mandrins de bobinage (35), que les fentes (41) présentent dans les autres parois latérales (27, 29, 31, 33) une profondeur qui correspond à peu près au diamètre des conducteurs des enroulements.

7. Dispositif selon la revendication 6, **caractérisé en ce** que les fentes ( 40 ; 41) dans les parois latérales (26, 27 ; 28, 29 ; 30, 31 ; 32, 33) de compartiments de bobinage voisins (22, 23, 24, 25) sont décalés à angle droit l'une par rapport à l'autre, que les fentes (40, 41) sont placées respectivement au milieu des parois latérales (26, 27, 28, 29, 30, 31, 32, 33), que l'arrangement de mandrins de bobinage (35) est constitué par des mandrins intérieurs et extérieurs qui peuvent être introduits séparément et qu'un compartiment de jonction supplémentaire (37, 38, 39) est placé respectivement entre des compartiments de bobinage voisins (22, 23, 24, 25).
